# EUROPEAN PATENT APPLICATION

(11) **EP 4 187 404 A1**
(43) Date of publication of application: **31.05.2023**
(21) Application number: 22211853.1
(22) Date of filing: 07.12.2022
(51) Int. Cl.: G06F 16/332, G06F 16/9032

(54) **METHOD AND APPARATUS FOR QUESTION ANSWERING BASED ON TABLE, AND ELECTRONIC DEVICE**

(30) Priority: 29.12.2021 CN 202111647546
(71) Applicant: Beijing Baidu Netcom Science Technology Co., Ltd., Beijing 100085 (CN)
(72) Inventor: HE, Dongfeng, Beijing, 100085 (CN); CHEN, Bingjin, Beijing, 100085 (CN); TU, Jiayang, Beijing, 100085 (CN); LIN, Yingzhan, Beijing, 100085 (CN); HUANG, Shiwei, Beijing, 100085 (CN)
(74) Representative: Maiwald GmbH

(57) **Abstract**

In the method for answer questioning based on a table, a question text to be processed and an information table for question answering are determined (S101), and the information table includes: at least one attribute name. A character vector sequence, a position vector sequence and a type vector sequence are determined (S102) based on the question text and the at least one attribute name. An attribute name segment and an attribute value segment in the question text are determined (S103) based on the character vector sequence, the position vector sequence and the type vector sequence. An answer corresponding to the question text is determined (S104) based on the attribute name segment, the attribute value segment and the information table.

## Description

### TECHNICAL FIELD

The disclosure relates to artificial intelligence (AI) technologies, specifically to technical fields of natural language processing (NLP) and deep learning (DL), and particularly to a method and an apparatus for question answering based on a table, and an electronic device.

### BACKGROUND

A question answering method in the related art mainly includes: converting characters in a question into character vectors (token embeddings in natural language processing) based on an input question, thereby determining a character vector sequence, and calculating a probability that characters in the question belong to a plurality of fixed types based on the character vector sequence. However, the types in the question answering based on a table are not fixed, the question answering efficiency is poor, and the accuracy is low.

### SUMMARY

A method and an apparatus for question answering based on a table, and an electronic device are provided in the disclosure.

According to a first aspect of the disclosure, a method for question answering based on a table is provided, and includes: determining a question text to be processed and an information table for question answering, the information table including: at least one attribute name; determining a character vector sequence, a position vector sequence and a type vector sequence based on the question text and the at least one attribute name; determining an attribute name segment and an attribute value segment in the question text based on the character vector sequence, the position vector sequence and the type vector sequence; and determining an answer corresponding to the question text based on the attribute name segment, the attribute value segment and the information table.

According to another aspect of the disclosure, a method for training a question answering model is provided, and includes: constructing an initial question answering model, the question answering model being: configured to perform a vector extraction on a question text and on an attribute name in an information table, to acquire a vector extraction module configured to extract a character vector sequence, a position vector sequence and a type vector sequence, a semantic extraction module configured to extract a semantic representation vector sequence, to splice the semantic representation vector of the question text character in the semantic representation vector sequence and the semantic representation vector of the attribute name, and to predict an attribute name segment and an attribute value segment in the question text; and acquiring training data, the training data including: at least one attribute name in the information table, a sample question text, and a sample attribute name segment and a sample attribute value segment corresponding to the sample question text; and training the question answering model by taking the sample question text and the at least one attribute name as inputs of the question answering model and by taking the sample attribute name segment and the sample attribute value segment as outputs of the question answering model.

According to another aspect of the disclosure, an apparatus for question answering based on a table is provided, and includes: a first determining module, configured to determine a question text to be processed and an information table for question answering, the information table including: at least one attribute name; a second determining module, configured to determine a character vector sequence, a position vector sequence and a type vector sequence based on the question text and the at least one attribute name; a third determining module, configured to determine an attribute name segment and an attribute value segment in the question text based on the character vector sequence, the position vector sequence and the type vector sequence; and a fourth determining module, configured to determine an answer corresponding to the question text based on the attribute name segment, the attribute value segment and the information table.

According to another aspect of the disclosure, an apparatus for training a question answering model is provided, and includes: a constructing module, configured to construct an initial question answering model, the question answering model being: configured to perform a vector extraction on a question text and on an attribute name in an information table, to acquire a vector extraction module configured to extract a character vector sequence, a position vector sequence and a type vector sequence, a semantic extraction module configured to extract a semantic representation vector sequence, to splice the semantic representation vector of the question text character in the semantic representation vector sequence and the semantic representation vector of the attribute name, and to predict an attribute name segment and an attribute value segment in the question text; an acquiring module, configured to acquire training data, the training data including: at least one attribute name in the information table, a sample question text, and a sample attribute name segment and a sample attribute value segment corresponding to the sample question text; and a training module, configured to train the question answering model by taking the sample question text and the at least one attribute name as inputs of the question answering model and by taking the sample attribute name segment and the sample attribute value segment as outputs of the question answering model.

According to another aspect of the disclosure, an electronic device is provided, and includes: at least one processor; and a memory communicatively connected to the at least one processor; the memory is stored with instructions executable by the at least one processor, the instructions are performed by the at least one processor, to cause the at least one processor to perform the method for question answering based on a table as described in the above aspect of the disclosure, or to perform the method for training a question answering model as described in the above another aspect of the disclosure.

According to another aspect of the disclosure, a non-transitory computer readable storage medium stored with computer instructions is provided, the computer instructions are configured to perform the method for question answering based on a table as described in the above aspect or the method for training a question answering model as described in the above another aspect by a computer.

According to another aspect of the disclosure, a computer program product including a computer program is provided. The computer program implements the blocks of the method for question answering based on a table as described in the above aspect or the blocks of the method for training a question answering model as described in the above another aspect when performed by a processor.

It should be understood that, the content described in the part is not intended to identify key or important features of embodiments of the disclosure, nor intended to limit the scope of the disclosure. Other features of the disclosure will be easy to understand through the following specification.

### BRIEF DESCRIPTION OF THE DRAWINGS

The drawings are intended to better understand the solution, and do not constitute a limitation to the disclosure.
FIG. 1 is a diagram according to a first embodiment of the disclosure;
FIG. 2 is a diagram of an information table;
FIG. 3 is a diagram according to a second embodiment of the disclosure;
FIG. 4 is a diagram according to a third embodiment of the disclosure;
FIG. 5 is a diagram of a structure of a question answering model;
FIG. 6 is a diagram according to a fourth embodiment of the disclosure;
FIG. 7 is a diagram according to a fifth embodiment of the disclosure;
FIG. 8 is a block diagram of an electronic device configured to implement the embodiment of the disclosure.

### DETAILED DESCRIPTION

The exemplary embodiments of the present disclosure are described as below with reference to the accompanying drawings, which include various details of embodiments of the present disclosure to facilitate understanding, and should be considered as merely exemplary. Therefore, those skilled in the art should realize that various changes and modifications may be made to the embodiments described herein without departing from the scope of the present disclosure. Similarly, for clarity and conciseness, descriptions of well-known functions and structures are omitted in the following descriptions.

A question answering method in the related art mainly includes: converting characters in a question into character vectors based on an input question, thereby determining a character vector sequence, and calculating a probability that characters in the question belong to a plurality of fixed types based on the character vector sequence. However, the types in the table question answering are not fixed, the question answering efficiency is poor, and the accuracy is low.

For the above problem, a method and an apparatus for question answering based on a table, and an electronic device are proposed in the disclosure.

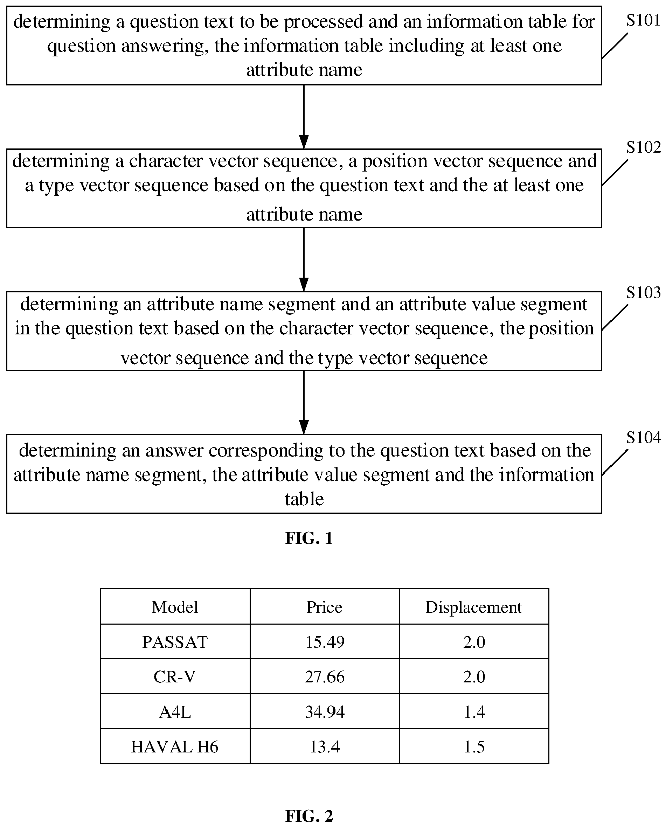

FIG. 1 is a diagram according to a first embodiment of the disclosure. It should be noted that, the method for question answering based on a table in the embodiment of the disclosure may be applied to an apparatus for question answering based on a table in the embodiment of the disclosure, and may be configured in an electronic device, so that the electronic device may perform a question answering function based on a table.

The electronic device may be any device with computing power. The device with computing power, for example, may be a personal computer (PC), a mobile terminal, a server, etc. The mobile terminal may be a hardware device with various operating systems, a touch screen and/or a display screen, such as a vehicle device, a mobile phone, a tablet computer, a personal digital assistant and a wearable device.

As illustrated in FIG. 1, the method for question answering based on a table may include the following blocks.

At block 101, a question text to be processed and an information table for question answering are determined, the information table including at least one attribute name.

In the embodiment of the disclosure, the question text to be processed is a text of a question asked by a user, which may be one or multiple. The question text, for example, may be, "I would like to know how much a PASSAT is", "What's the engine displacement of the HAVAL H6?", "How much is the HAVAL H6?".

In the embodiment of the disclosure, the information table includes an attribute name and an attribute value, the attribute name corresponding to the attribute value, and the information table includes at least one attribute name, each attribute name corresponding to at least one attribute value. FIG. 2 is a diagram of an information table. As illustrated in FIG. 2, the attribute name included in the information table, for example, may be "Model" , "Price", "Displacement", and when the attribute name is "Model", the corresponding attribute value, for example, may be, "PASSAT", "CR-V", "A4L", "HAVAL H6"; when the attribute name is "Price", the corresponding attribute name, for example, may be "15.49", "27.66", "34.94", "13.4"; when the attribute name is "Displacement", the corresponding attribute name, for example, may be, "2.0", "1.4", "1.5".

At block 102, a character vector sequence, a position vector sequence and a type vector sequence are determined based on the question text and the at least one attribute name.

In the embodiment of the disclosure, the process of performing block 102 by an apparatus for question answering based on a table, for example, may be generating a question attribute character sequence based on the characters in the question text and the characters in the at least one attribute name; obtaining the character vector sequence by vectorizing the characters in the question attribute character sequence; obtaining the position vector sequence by vectorizing the position information of the characters in the question attribute character sequence; and obtaining the type vector sequence by vectorizing the type information of the characters in the question attribute character sequence, the type information represents that the characters belong to the question text or the at least one attribute name.

The character vector sequence includes character vectors of characters in a question attribute character sequence. Character vectors of characters are obtained by vectorizing the characters using a one-hot vector algorithm and a word vector algorithm (word2vec), and are configured to distinguish different characters by character vectors. The algorithm may be configured based on the requirement.

The position vector sequence includes position vectors of characters in a question attribute character sequence. The position vector of the character represents a position of the character in a question attribute vector sequence, and different position vectors represent different positions.

The type vector sequence includes type vectors of characters in a question attribute character sequence. The type vector of the character represents that the character belongs to a question text or at least one attribute name. There are two types of type vectors, and a first type of representation character belongs to a question text; and a second type of representation character belongs to at least one attribute name.

In the embodiment of the disclosure, a question attribute character sequence is generated based on each character in a question text and each character in at least one attribute, thereby determining each character in the question text belongs to which attribute name, or belongs to an attribute value corresponding to which attribute name, the attribute name may be changed based on the requirement, so that the method for question answering based on a table in the disclosure is not limited to the number and the type of attribute name, and may be applied to different information tables in different scenarios, and an answer corresponding to a question text may be determined using an information table in a specific scenario, thereby reducing a cost of question answering based on a table, improving the efficiency of question answering based on a table and the accuracy of question answering based on a table.

At block 103, an attribute name segment and an attribute value segment in the question text are determined based on the character vector sequence, the position vector sequence and the type vector sequence.

In the embodiment of the disclosure, which attribute name does each character in the question text belong to, or which attribute value the attribute name corresponding to does each character in the question text belong to are determined based on the character vector sequence, the position vector sequence and the type vector sequence; further, the attribute name each character belongs to is determined as an attribute name segment; and a certain attribute value corresponding to the attribute name each character belongs to is determined as an attribute value segment.

At block 104, an answer corresponding to the question text is determined based on the attribute name segment, the attribute value segment and the information table.

In the embodiment of the disclosure, the process of performing block 104 by an apparatus for question answering based on a table may be, for example, acquiring contents corresponding to the attribute name segment and the attribute name segment by querying the information table based on the attribute name segment and the attribute name segment; and determining an answer to the question text based on the contents.

Taking the question text being "I would like to know how much a PASSAT is" and the information table being an information table as illustrated in FIG. 2 for an example, "PASSAT" in a question text corresponds to an attribute value segment "PASSAT" in FIG. 2, and "How much" in a question text corresponds to an attribute value segment "Price" in FIG. 2; an information table as illustrated in FIG. 2 is queried based on the attribute name segment and the attribute value segment, that is, the content "15.49" corresponding to the attribute name segment and the attribute value segment is obtained as an answer corresponding to the above question.

In the embodiment of the disclosure, an attribute name segment and an attribute value segment in the question text are determined based on the question text and the at least one attribute name in the information table, so that the contents corresponding to the attribute name segment and the attribute value segment may be obtained by querying the information table based on the attribute name segment and the attribute value segment, thereby further improving the efficiency of question answering based on a table and the accuracy of question answering based on a table.

In summary, a question text to be processed and an information table for question answering are determined, the information table including: at least one attribute name; a character vector sequence, a position vector sequence and a type vector sequence are determined based on the question text and the at least one attribute name; an attribute name segment and an attribute value segment in the question text are determined based on the character vector sequence, the position vector sequence and the type vector sequence; and an answer corresponding to the question text is determined based on the attribute name segment, the attribute value segment and the information table, thereby improving the efficiency of question answering based on a table and the accuracy of question answering based on a table.

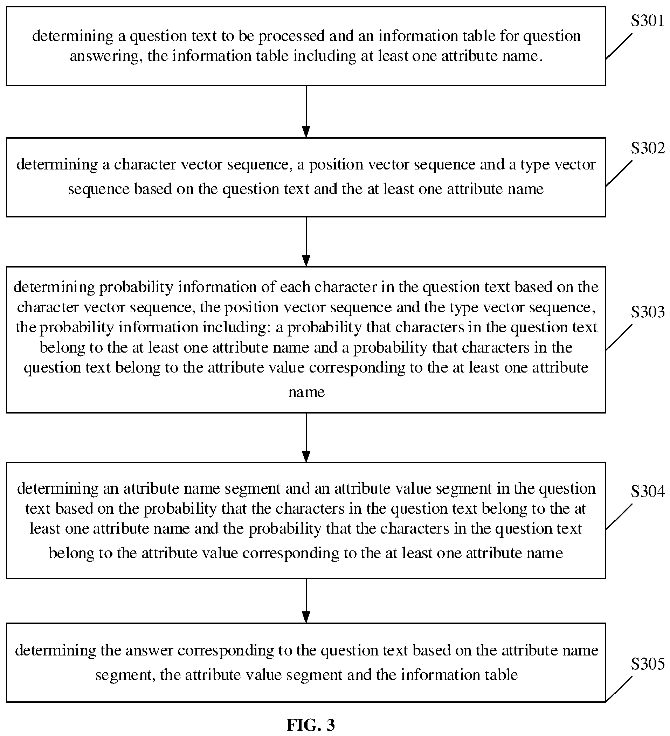

In order to accurately determine an attribute name segment and an attribute value segment in the question text and to improve the efficiency of question answering based on a table and the accuracy of question answering based on a table, probability information of each character in the question text needs to be determined. FIG. 3 is a diagram according to a second embodiment of the disclosure. In the embodiment of the disclosure, probability information of each character in the question text is determined first based on the character vector sequence, the position vector sequence and the type vector sequence, the probability information includes a probability that characters in the question text belong to the at least one attribute name and a probability that characters in the question text belong to the attribute value corresponding to the at least one attribute name, and further an attribute name segment and an attribute value segment in the question text are determined. The embodiment as illustrated in FIG. 3 may include the following blocks:
At block 301, a question text to be processed and an information table for question answering are determined, the information table including at least one attribute name.
At block 302, a character vector sequence, a position vector sequence and a type vector sequence are determined based on the question text and the at least one attribute name.
At block 303, probability information of each character in the question text is determined based on the character vector sequence, the position vector sequence and the type vector sequence, the probability information including: a probability that characters in the question text belong to the at least one attribute name and a probability that characters in the question text belong to the attribute value corresponding to the at least one attribute name.

In the embodiment of the disclosure, the process of performing block 303 by an apparatus for question answering based on a table, for example, may be obtaining a processed vector sequence by adding the character vector sequence, the position vector sequence and the type vector sequence; obtaining a semantic representation vector sequence by performing semantic representation extraction processing on the processed vector sequence, the semantic representation vector sequence including: semantic representation vectors of characters in the question text and semantic representation vectors of characters in the at least one attribute name; for each attribute name, determining a semantic representation vector of the attribute name by adding and averaging semantic representation vectors of characters in the attribute name; for any character attribute name pair, obtaining a first spliced vector by splicing the semantic representation vector of the first character in the character attribute name pair and the semantic representation vector of the first attribute name in the character attribute name pair; and determining a probability that the first character belongs to the first attribute name and a probability that the first character belongs to the attribute value corresponding to the first attribute name based on the first spliced vector.

In the embodiment of the disclosure, the character vector sequence, the position vector sequence and the type vector sequence are added, and a semantic representation vector sequence is obtained by performing semantic representation processing on the processed vector sequence, and further a probability that the characters in the text belong to an attribute name and an attribute value is determined, which may improve the accuracy of the semantic representation vectors of the characters in the question text and the accuracy of the semantic representation vectors of the characters in the attribute name, thereby improving the accuracy of probability information, which further improves the accuracy of the attribute name segment and the attribute value segment determined, and further improves the accuracy of question answering based on a table.

At block 304, an attribute name segment and an attribute value segment in the question text are determined based on the probability that the characters in the question text belong to the at least one attribute name and the probability that the characters in the question text belong to the attribute value corresponding to the at least one attribute name.

In the embodiment of the disclosure, the process of performing block 304 by an apparatus for question answering based on a table may be, for example, for characters in the question text, determining an attribute name to which the characters belong or an attribute value to which the characters belong based on the probability that the characters belong to the at least one attribute name and the probability that the characters belong to the attribute value corresponding to the at least one attribute name; and determining the attribute name segment and the attribute value segment based on the attribute name to which the characters belong or the attribute value to which the characters belong in the question text.

In the embodiment of the disclosure, when the probability that the characters belong to the at least one attribute name and the probability that the characters belong to the attribute value corresponding to the at least one attribute name are determined, a maximum probability may be determined; when the maximum probability corresponds to a certain attribute name, the attribute name is determined as an attribute name the characters belong to, and the attribute name is determined as an attribute name segment; when the maximum probability corresponds to a certain attribute value of a certain attribute name, the attribute value is determined as an attribute value the characters belong to, and the attribute value is determined as an attribute value segment.

In the embodiment of the disclosure, a probability that characters in the question text belong to an attribute name and an attribute value corresponding to the attribute name is determined, thereby improving the accuracy of the attribute value the attribute name the characters belong to or the attribute value the characters belong to, which further improves the accuracy of the attribute name segment and the attribute value segment determined, and further improves the accuracy of question answering based on a table.

At block 305, the answer corresponding to the question text is determined based on the attribute name segment, the attribute value segment and the information table.

It needs to be noted that, the description of blocks 301, 302 and 305 may refer to blocks 101, 102 and 104 in the embodiment as illustrated in FIG. 1, which is not described here.

In summary, a question text to be processed and an information table for question answering are determined, the information table including: at least one attribute name; a character vector sequence, a position vector sequence and a type vector sequence are determined based on the question text and the at least one attribute name; probability information of each character in the question text is determined based on the character vector sequence, the position vector sequence and the type vector sequence, the probability information including: a probability that characters in the question text belong to the at least one attribute name and a probability that characters in the question text belong to the attribute value corresponding to the at least one attribute name; an attribute name segment and an attribute value segment in the question text are determined based on the probability that the characters in the question text belong to the at least one attribute name and the probability that the characters in the question text belong to the attribute value corresponding to the at least one attribute name; and an answer corresponding to the question text is determined based on the attribute name segment, the attribute value segment and the information table, thereby improving the efficiency of question answering based on a table and the accuracy of question answering based on a table.

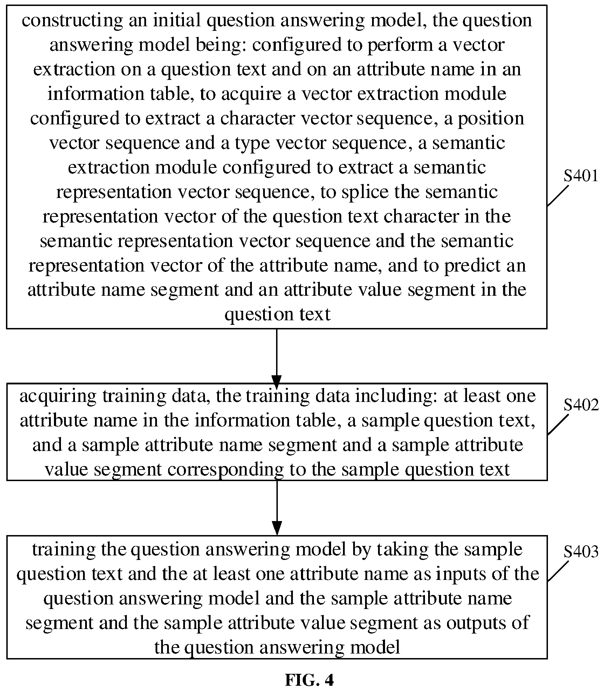

FIG. 4 is a diagram according to a third embodiment of the disclosure. It should be noted that, the method for training a question answering model in the embodiment of the disclosure is applied to an apparatus for training a question answering model. The apparatus for training a question answering model may be configured in any electronic device to cause the electronic device to perform a training function of a question answering model.

The electronic device may be any device with computing power. The device with computing power, for example, may be a personal computer (PC), a mobile terminal, a server, etc. The mobile terminal may be a hardware device with various operating systems, a touch screen and/or a display screen, such as a vehicle device, a mobile phone, a tablet computer, a personal digital assistant and a wearable device.

As illustrated in FIG. 4, the method for training a question answering model may include the following blocks.

At block 401, an initial question answering model is constructed, the question answering model being: configured to perform a vector extraction on a question text and on an attribute name in an information table, to acquire a vector extraction module configured to extract a character vector sequence, a position vector sequence and a type vector sequence, a semantic extraction module configured to extract a semantic representation vector sequence, to splice the semantic representation vector of the question text character in the semantic representation vector sequence and the semantic representation vector of the attribute name, and to predict an attribute name segment and an attribute value segment in the question text.

In the embodiment of the disclosure, a semantic extraction module, for example, may be an encoding module in an Enhanced Representation from kNowledge IntEgration (ERNIE) model.

At block 402, training data is acquired, the training data including: at least one attribute name in the information table, a sample question text, and a sample attribute name segment and a sample attribute value segment corresponding to the sample question text.

At block 403, the question answering model is trained by taking the sample question text and the at least one attribute name as inputs of the question answering model and the sample attribute name segment and the sample attribute value segment as outputs of the question answering model.

In the embodiment of the disclosure, in an example, in order to improve the accuracy of the trained question answering model, the process of performing block 403 by an apparatus for training a question answering model, for example, may be acquiring a predicted attribute name segment and a predicted attribute value segment output by the question and answer model by inputting the sample question text and the at least one attribute name into the question and answer model; constructing a loss function based on the predicted attribute name segment, the predicted attribute value segment, the sample attribute name segment, and the sample attribute value segment; and implementing training by performing a coefficient adjustment on the question and answer model based on the value of the loss function.

In the embodiment of the disclosure, in another example, in order to improve the accuracy of the trained question answering model, a loss function may be constructed in combination with the matching degree between the characters in the question text and the characters in the attribute name. Therefore, the question answering model further includes: a semantic matching module, configured to determine a semantic matching degree by performing semantic matching on the semantic representation vector of the question text character and the semantic representation vector of the attribute name in the semantic representation vector sequence. The process of performing block 403 by an apparatus for training a question answering model, for example, may be acquiring a predicted attribute name segment and a predicted attribute value segment output by the question and answer model by inputting the sample question text and the at least one attribute name into the question and answer model; constructing a first loss function based on the predicted attribute name segment, the predicted attribute value segment, the sample attribute name segment, and the sample attribute value segment; constructing a second loss function based on a predicted matching degree output by the semantic matching module and a preset matching degree threshold; constructing a total loss function based on the first loss function and the second loss function; and implementing training by performing coefficient adjustment on the question answering model based on the value of the loss function.

In the embodiment of the disclosure, a loss function is constructed based on the semantic matching degree between the semantic representation vector of the question text character and the semantic representation vector of the attribute name in the semantic representation vector sequence, which may improve the accuracy of a trained question answering model and speed up a training speed of a question answering model.

In summary, an initial question answering model is constructed, and the question answering model is: configured to perform a vector extraction on a question text and an attribute name in an information table, to acquire a vector extraction module configured to extract a character vector sequence, a position vector sequence and a type vector sequence, a semantic extraction module configured to extract a semantic representation vector sequence, to splice the semantic representation vector of the question text character in the semantic representation vector sequence and the semantic representation vector of the attribute name, and to predict an attribute name segment and an attribute value segment in the question text; and training data is acquired, and the training data includes: at least one attribute name in the information table, a sample question text, and a sample attribute name segment and a sample attribute value segment corresponding to the sample question text; and a question answering model is trained by taking the sample question text and the at least one attribute name as inputs of the question answering model and the sample attribute name segment and the sample attribute value segment as outputs of the question answering model, thereby improving the efficiency of question answering based on a table and the accuracy of question answering based on a table.

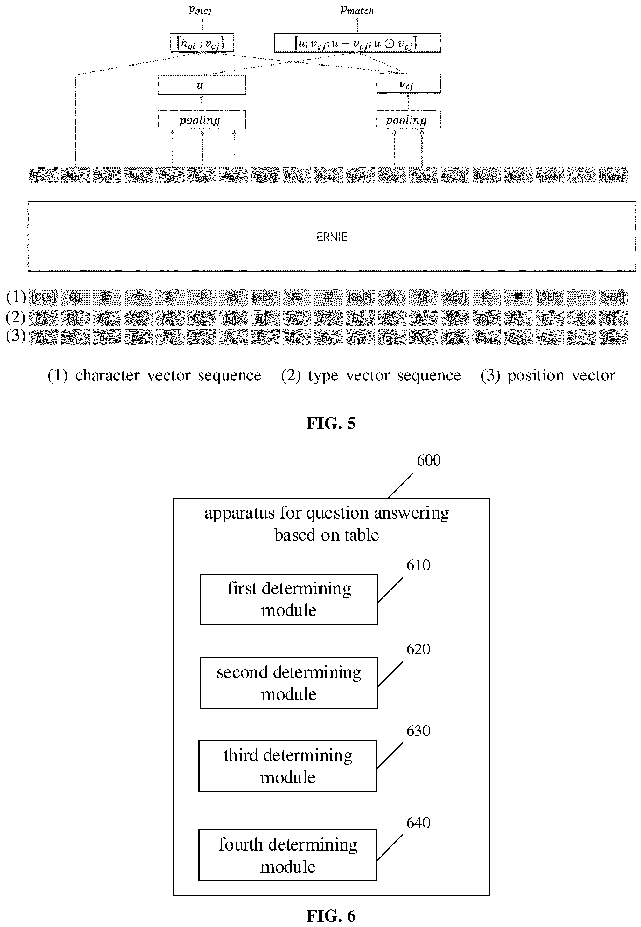

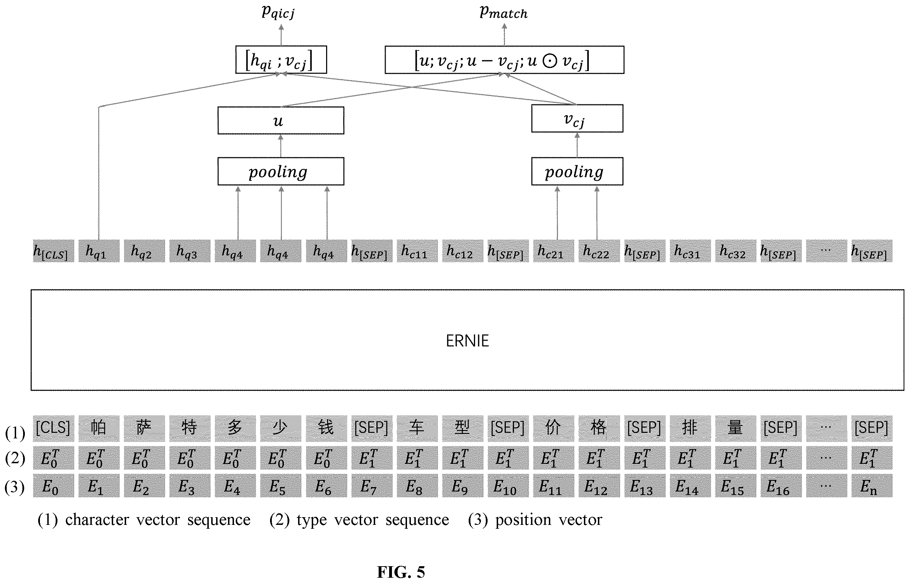

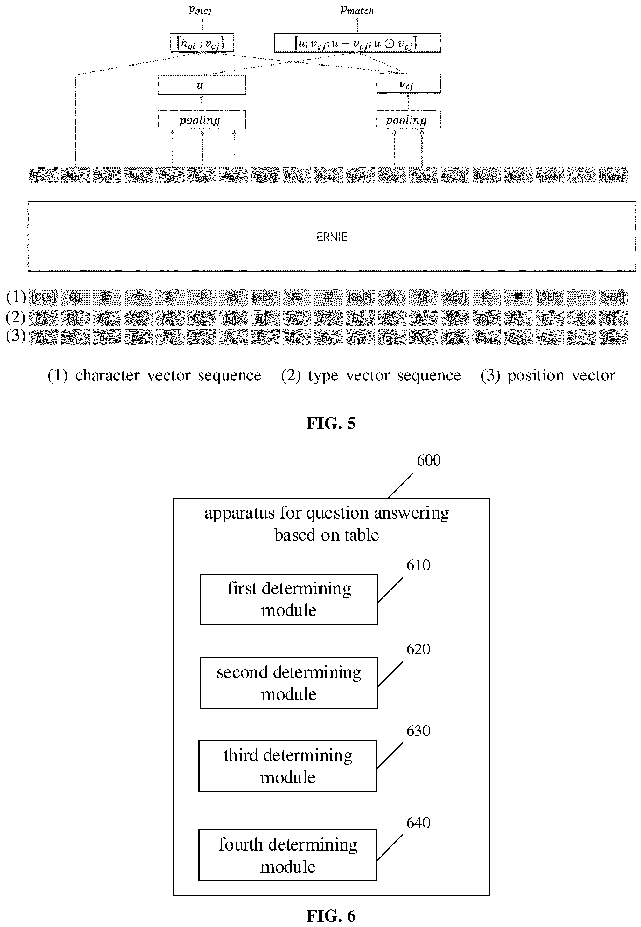

For example, FIG. 5 is a diagram of a structure of a question answering model. As illustrated in FIG. 5, a sample question text and at least one attribute name are inputs of a question answering model, the detailed input format as follow: [CLS]*Q*₁, *Q*₂, ... [SEP]*C*₁₁,*C*₁₂... [SEP]*C*₂₁,*C*₂₂, ... [SEP] ... [SEP], where, *Qᵢ* is an i^{th} character in a sample question text, and *Cⱼₖ* is a k^{th} character in a j^{th} attribute name in an information table. A sample question text is separated from an attribute name, and an attribute name is separated from an attribute name by a separator "[SEP]" inside an ERNIE model. A question attribute character sequence is obtained by splicing characters in the sample question text and characters in the attribute name of the information table; a character vector sequence, a position vector sequence and a type vector sequence are obtained by vectorizing characters, position information of characters and type information of characters in the question attribute vector sequence; a processed vector sequence (input sequence) is obtained by adding the character vector sequence, the position vector sequence and the type vector sequence, and fed into a semantic extraction module (an encoding module of an ERNIE model) for semantic representation extraction processing to obtain a semantic representation vector sequence. The character vector sequence, the position vector sequence and the type vector sequence correspondingly encode semantic information, position information and type information of characters. *h_{qi}*is a semantic representation vector of an i^{th} character in a sample question text, and *h_{cjk}* is a semantic representation vector of a k^{th} character in a j^{th} attribute name.

In FIG. 5, semantic representation vectors of all characters of each attribute name included in a semantic representation vector sequence are averaged (average pooling), that is, averaged and pooled (summed and then averaged) to obtain a semantic representation vector of each attribute name, and the semantic representation vector of a j^{th} attribute name is denoted as *v_{cj}.* For example, "Price" is a second attribute of an input sequence, the semantic representation vectors of two characters are *h*_{*c*21}and *h*_{*c*22}, and the two semantic representation vectors are averaged to obtain a semantic representation vector *v*_{*c*2} of a price attribute.

In FIG. 5, a first spliced vector [*h_{qi}*;*v_{cj}*] is obtained by splicing the semantic representation vector of each character and the semantic representation vector of each attribute name in the sample question text. Then, a probability *p_{qicj}* is calculated using the first spliced vector [*h_{qi}*;*v_{cj}*], *p_{qicj}* is a three-dimensional vector, and may be represented as (*pₙₐₘₑ, pᵥₐₗᵤₑ, Pₒₜₕₑᵣₛ*), *Pₙₐₘₑ* represents a probability that an i^{th} character in a sample question text belongs to an attribute name of a j^{th} attribute, *pᵥₐₗᵤₑ* represents a probability that an ^{ith} character in a sample question text belongs to an attribute value in a j^{th} attribute, and *Pₒₜₕₑᵣₛ* represents a probability that an ^{ith} character in a sample question text belongs to an attribute value of a non-attribute name of a ^{jth} attribute, a sum of the three probabilities being 1. For example, (0.1, 0.9, 0) is calculated based on a first character "PASSAT" and a first attribute "Model" in a sample question text, representing that "PASSAT" has a 10% possibility of being an attribute name of a model attribute, a 90% possibility of being an attribute value of a model attribute, and a 0% possibility of being unrelated with a model attribute, further to obtain a predicted attribute name segment and a predicted attribute value segment, and a first loss function is constructed based on the predicted attribute name segment, the predicted attribute value segment, the sample attribute name segment, and the sample attribute value segment.

In FIG. 5, semantic representation extraction processing is performed for each sample segment, for example, a sample attribute name segment or a sample attribute value segment. Taking a sample attribute name segment for an example, a second spliced vector u is obtained by splicing semantic representation vectors of characters of the attribute name segment the sample question text belongs to as the sample attribute name segment; a spliced vector [u; v_{cj}; u - v_{cj}; u ⊙ v_{cj}] is obtained by subtracting and multiplying the second spliced vector u and the semantic representation vector v_{cj} of each attribute name and splicing with the original u, v_{cj}, and a matching degree p_{match} between the sample attribute name segment and a j^{th} attribute is calculated using the spliced vector. p_{match} is a scalar with a value range of 0~1, and the closer it is to 0, the lower the matching degree is, and the closer it is to 1, the higher the matching degree is. The higher the matching degree between the sample attribute name segment and the predicted attribute name segment, the better; the higher the matching degree between the sample attribute value segment and the predicted attribute value segment, the better; the lower the matching degree between other segments, the better. Further, a second loss function is constructed based on the matching degree and the KL divergence between segments. A total loss function is constructed based on the first loss function and the second loss function; and training is implemented by performing a coefficient adjustment on the question answering model based on the value of the loss function.

In order to achieve the above embodiment, an apparatus for question answering based on a table is further provided.

FIG. 6 is a diagram according to a fourth embodiment of the disclosure. The apparatus 600 for question answering based on a table includes a first determining module 610, a second determining module 620, a third determining module 630 and a fourth determining module 640.

The first determining module 610 is configured to determine a question text to be processed and an information table for question answering, the information table including: at least one attribute name; the second determining module 620 is configured to determine a character vector sequence, a position vector sequence and a type vector sequence based on the question text and the at least one attribute name; the third determining module 630 is configured to determine an attribute name segment and an attribute value segment in the question text based on the character vector sequence, the position vector sequence and the type vector sequence; and the fourth determining module 640 is configured to determine an answer corresponding to the question text based on the attribute name segment, the attribute value segment and the information table.

As a possible implementation in the embodiment of the disclosure, the second determining module 620 is specifically configured to generate a question attribute character sequence based on the characters in the question text and the characters in the at least one attribute name; to obtain the character vector sequence by vectorizing the characters in the question attribute character sequence; to obtain the position vector sequence by vectorizing the position information of the characters in the question attribute character sequence; and to obtain the type vector sequence by vectorizing the type information of the characters in the question attribute character sequence, the type information representing that the characters belong to the question text or the at least one attribute name.

As a possible implementation of the embodiment of the disclosure, the third determining module 630 includes a first determining unit and a second determining unit.

The first determining unit is configured to determine probability information of each character in the question text based on the character vector sequence, the position vector sequence and the type vector sequence, the probability information including: a probability that characters in the question text belong to the at least one attribute name and a probability that characters in the question text belong to the attribute value corresponding to the at least one attribute name; and the second determining unit is configured to determine an attribute name segment and an attribute value segment in the question text based on the probability that the characters in the question text belong to the at least one attribute name and the probability that the characters in the question text belong to the attribute value corresponding to the at least one attribute name.

As a possible implementation of the embodiment of the disclosure, the first determining unit is specifically configured to, obtain a processed vector sequence by adding the character vector sequence, the position vector sequence and the type vector sequence; obtain a semantic representation vector sequence by performing semantic representation extraction processing on the processed vector sequence, the semantic representation vector sequence including: semantic representation vectors of characters in the question text and semantic representation vectors of characters in the at least one attribute name; for each attribute name, determine a semantic representation vector of the attribute name by adding and averaging semantic representation vectors of characters in the attribute name; for any character attribute name pair, obtain a first spliced vector by splicing the semantic representation vector of the first character in the character attribute name pair and the semantic representation vector of the first attribute name in the character attribute name pair; and determine a probability that the first character belongs to the first attribute name and a probability that the first character belongs to the attribute value corresponding to the first attribute name based on the first spliced vector.

As a possible implementation of the embodiment of the disclosure, the second determining unit is specifically configured to, for characters in the question text, determine an attribute name to which the characters belong or an attribute value to which the characters belong based on the probability that the characters belong to the at least one attribute name and the probability that the characters belong to the attribute value corresponding to the at least one attribute name; and determine the attribute name segment and the attribute value segment based on the attribute name to which the characters belong or the attribute value to which the characters belong in the question text.

As a possible implementation of the embodiment of the disclosure, the information table further includes: at least one attribute value corresponding to each of the attribute names. The fourth determining module 640 is specifically configured to: acquire contents corresponding to the attribute name segment and the attribute value segment by querying the information table based on the attribute name segment and the attribute value segment; and determine an answer to the question text based on the contents.

In the apparatus for question answering based on a table in the embodiment of the disclosure, a question text to be processed and an information table for question answering are determined, the information table including: at least one attribute name; a character vector sequence, a position vector sequence and a type vector sequence are determined based on the question text and the at least one attribute name; an attribute name segment and an attribute value segment in the question text are determined based on the character vector sequence, the position vector sequence and the type vector sequence; and an answer corresponding to the question text is determined based on the attribute name segment, the attribute value segment and the information table, thereby improving the efficiency of question answering based on a table and the accuracy of question answering based on a table.

In order to achieve the above embodiment, an apparatus for training a question answering model is further provided in the disclosure.

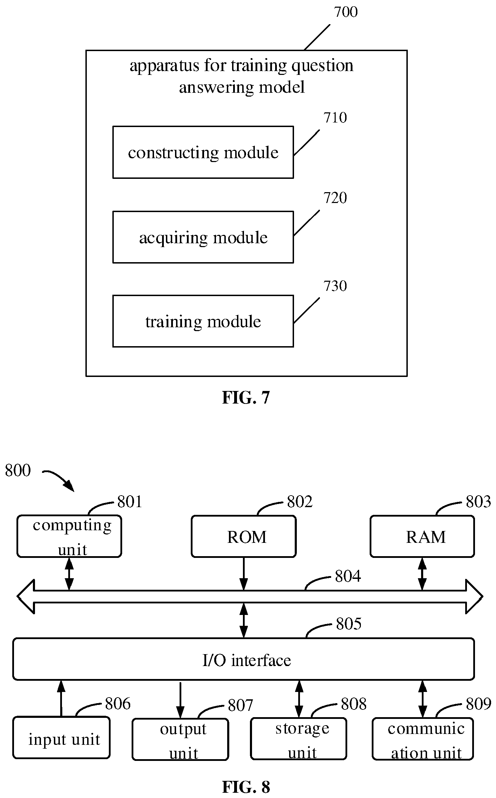

FIG. 7 is a diagram according to a fifth embodiment of the disclosure. The apparatus 700 for training a question answering model includes a constructing module 710, an acquiring module 720 and a training module 730.

The constructing module 710 is configured to construct an initial question answering model, the question answering model being: configured to perform a vector extraction on a question text and an attribute name in an information table, to acquire an vector extraction module configured to extract a character vector sequence, a position vector sequence and a type vector sequence, and a semantic extraction module configured to extract a semantic representation vector sequence, to splice the semantic representation vector of the question text character in the semantic representation vector sequence and the semantic representation vector of the attribute name, and to predict an attribute name segment and an attribute value segment in the question text.

The acquiring module 720 is configured to acquire training data, and the training data includes: at least one attribute name in the information table, a sample question text, and a sample attribute name segment and a sample attribute value segment corresponding to the sample question text.

The training module 730 is configured to train the question answering model by taking the sample question text and the at least one attribute name as inputs of the question answering model and the sample attribute name segment and the sample attribute value segment as outputs of the question answering model.

As a possible implementation in the embodiment of the disclosure, the training module 730 is specifically configured to: acquire a predicted attribute name segment and a predicted attribute value segment output by the question answering model by inputting the sample question text and the at least one attribute name into the question answering model; construct a loss function based on the predicted attribute name segment, the predicted attribute value segment, the sample attribute name segment, and the sample attribute value segment; and implement training by performing coefficient adjustment on the question answering model based on the value of the loss function.

As a possible implementation of the embodiment of the disclosure, the question answering model further includes: a semantic matching module, configured to determine a semantic matching degree by performing semantic matching on the semantic representation vector of the question text character and the semantic representation vector of the attribute name in the semantic representation vector sequence. The training module 730 is specifically configured to: acquire a predicted attribute name segment and a predicted attribute value segment output by the question answering model by inputting the sample question text and the at least one attribute name into the question answering model; construct a first loss function based on the predicted attribute name segment, the predicted attribute value segment, the sample attribute name segment, and the sample attribute value segment; construct a second loss function based on a predicted matching degree output by the semantic matching module and a preset matching degree threshold; construct a total loss function based on the first loss function and the second loss function; and implement training by performing a coefficient adjustment on the question answering model based on the value of the loss function.

In the apparatus for training a question answering model, an initial question answering model is constructed, and the question answering model is: configured to perform vector extraction on a question text and an attribute name in an information table, to acquire an vector extraction module configured to extract a character vector sequence, a position vector sequence and a type vector sequence, a semantic extraction module configured to extract a semantic representation vector sequence, to splice the semantic representation vector of the question text character in the semantic representation vector sequence and the semantic representation vector of the attribute name, and to predict an attribute name segment and an attribute value segment in the question text; and training data is acquired, the training data including: at least one attribute name in the information table, a sample question text, and a sample attribute name segment and a sample attribute value segment corresponding to the sample question text; and a question answering model is trained by taking the sample question text and the at least one attribute name as inputs of the question answering model and the sample attribute name segment and the sample attribute value segment as outputs of the question answering model, thereby improving the efficiency of question answering based on a table and the accuracy of question answering based on a table.

In the technical solution in the disclosure, collection, storage, use, processing, transmission, provision and disclosure of the user personal information involved in the technical solution of the disclosure are performed with the consent of the user, comply with relevant laws and regulations, and do not violate public order and good customs.

According to the embodiment of the disclosure, an electronic device, a readable storage medium and a computer program product are further provided in the disclosure.

FIG. 8 is a schematic block diagram illustrating an example electronic device 800 in the embodiment of the present disclosure. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 8, the electronic device 800 includes a computing unit 801, which may execute various appropriate actions and processings based on a computer program stored in a read-only memory (ROM) 802 or a computer program loaded into a random access memory (RAM) 803 from a storage unit 808. In the RAM 803, various programs and data required for operation of the electronic device 800 also may be stored. A computing unit 801, a ROM 802 and a RAM 803 may be connected with each other by a bus 804. An input/output (I/O) interface 805 is also connected to a bus 804.

A plurality of components in the electronic device 800 are connected to an I/O interface 805, and includes: an input unit 806, for example, a keyboard, a mouse, etc.; an output unit 807, for example various types of displays, speakers; a memory unit 808, for example a magnetic disk, an optical disk; and a communication unit 809, for example, a network card, a modem, a wireless transceiver. A communication unit 809 allows the electronic device 800 to exchange information/data through a computer network such as internet and/or various types of telecommunication networks and other devices.

The computing unit 801 may be various types of general and/or dedicated processing components with processing and computing ability. Some examples of a computing unit 801 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 801 performs various methods and processings as described above, for example, the method for question answering based on a table or the method for training a question answering model. For example, in some embodiments, the method for question answering based on a table or the method for training a question answering model may be further achieved as a computer software program, which is physically contained in a machine readable medium, such as a storage unit 808. In some embodiments, some or all of the computer programs may be loaded and/or mounted on the electronic device 800 via a ROM 802 and/or a communication unit 809. When the computer program is loaded on a RAM 803 and executed by a computing unit 801, one or more blocks in the method for question answering based on a table or the method for training a question answering model as described above may be performed. Alternatively, in other embodiments, a computing unit 801 may be configured to perform the method for question answering based on a table or the method for training a question answering model in other appropriate ways (for example, by virtue of a firmware).

Various implementation modes of the systems and technologies described above may be achieved in a digital electronic circuit system, a field programmable gate array (FPGA), an application-specific integrated circuit (ASIC), an application specific standard product (ASSP), a system-on-chip (SOC) system, a complex programmable logic device, a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the present disclosure may be written with one or any combination of a plurality of programming languages. The programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be performed completely or partly on the machine, performed partly on the machine as an independent software package and performed partly or completely on the remote machine or server.

In the context of the disclosure, a machine-readable medium may be a tangible medium that may contain or store a program intended for use in or in conjunction with an instruction execution system, apparatus, or device. A machine readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an erasable programmable read-only memory (an EPROM or a flash memory), an optical fiber device, and a portable optical disk read-only memory (CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a speech input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), a blockchain network, and an internet.

The computer system may include a client and a server. The client and server are generally far away from each other and generally interact with each other through a communication network. The relationship between the client and the server is generated by computer programs running on the corresponding computer and having a client-server relationship with each other. A server may be a cloud server, and further may be a server of a distributed system, or a server in combination with a blockchain.

It should be understood that, various forms of procedures shown above may be configured to reorder, add or delete blocks. For example, blocks described in the disclosure may be executed in parallel, sequentially, or in different orders, as long as the desired result of the technical solution disclosed in the present disclosure may be achieved, which will not be limited herein.

The above specific implementations do not constitute a limitation on the protection scope of the disclosure. Those skilled in the art should understand that various modifications, combinations, sub-combinations and substitutions may be made according to design requirements and other factors. Any modification, equivalent replacement, improvement, etc., made within the principle of embodiments of the present disclosure shall be included within the protection scope of the present disclosure.

## Claims

1. A method for question answering based on a table, comprising:
determining (S101; S301) a question text to be processed and an information table for question answering, wherein, the information table comprises: at least one attribute name;
determining (S102; S302) a character vector sequence, a position vector sequence and a type vector sequence based on the question text and the at least one attribute name;
determining (S 103) an attribute name segment and an attribute value segment in the question text based on the character vector sequence, the position vector sequence and the type vector sequence; and
determining (S104; S305) an answer corresponding to the question text based on the attribute name segment, the attribute value segment and the information table.

2. The method of claim 1, wherein, determining (S102; S302) the character vector sequence, the position vector sequence and the type vector sequence based on the question text and the at least one attribute name, comprises:
generating a question attribute character sequence based on characters in the question text and the characters in the at least one attribute name;
obtaining the character vector sequence by vectorizing characters in the question attribute character sequence;
obtaining the position vector sequence by vectorizing position information of the characters in the question attribute character sequence; and
obtaining the type vector sequence by vectorizing type information of the characters in the question attribute character sequence, wherein, the type information represents that the characters belong to the question text or the at least one attribute name.

3. The method of claim 1 or 2, wherein, determining (S103) the attribute name segment and the attribute value segment in the question text based on the character vector sequence, the position vector sequence and the type vector sequence, comprises:
determining (S303) probability information of each character in the question text based on the character vector sequence, the position vector sequence and the type vector sequence, wherein, the probability information comprises: a probability that characters in the question text belong to the at least one attribute name and a probability that characters in the question text belong to an attribute value corresponding to the at least one attribute name; and
determining (S304) an attribute name segment and an attribute value segment in the question text based on the probability that the characters in the question text belong to the at least one attribute name and the probability that the characters in the question text belong to the attribute value corresponding to the at least one attribute name.

4. The method of claim 3, wherein, determining (S303) the probability information of the characters in the question text based on the character vector sequence, the position vector sequence and the type vector sequence, comprises:
obtaining a processed vector sequence by adding the character vector sequence, the position vector sequence and the type vector sequence;
obtaining a semantic representation vector sequence by performing a semantic representation extraction processing on the processed vector sequence, wherein, the semantic representation vector sequence comprises: semantic representation vectors of the characters in the question text and semantic representation vectors of the characters in the at least one attribute name;
for each attribute name, determining a semantic representation vector of the attribute name by adding and averaging semantic representation vectors of the characters in the at least one attribute name;
for any character attribute name pair, obtaining a first spliced vector by splicing the semantic representation vector of a first character in the character attribute name pair and the semantic representation vector of a first attribute name in the character attribute name pair; and
determining a probability that the first character belongs to the first attribute name and a probability that the first character belongs to the attribute value corresponding to the first attribute name based on the first spliced vector.

5. The method of claim 3, wherein, determining (S304) the attribute name segment and the attribute value segment in the question text based on the probability that the characters in the question text belong to the at least one attribute name and the probability that the characters in the question text belong to the attribute value corresponding to the at least one attribute name, comprising:
for each character in the question text, determining an attribute name to which the characters belong or an attribute value to which the characters belong based on the probability that the characters belong to the at least one attribute name and the probability that the characters belong to the attribute value corresponding to the at least one attribute name; and
determining the attribute name segment and the attribute value segment based on the attribute name to which the characters belong or the attribute value to which the characters belong in the question text.

6. The method of any one of claims 1 to 5, wherein, the information table further comprises: at least one attribute value corresponding to each of the attribute names;
determining the answer corresponding to the question text based on the attribute name segment, the attribute value segment and the information table, comprising:
acquiring contents corresponding to the attribute name segment and the attribute value segment by querying the information table based on the attribute name segment and the attribute value segment; and
determining the answer to the question text based on the contents.

7. A method for training a question answering model, comprising:
constructing (S401) an initial question answering model, wherein, the question answering model is configured to perform a vector extraction on a question text and on an attribute name in an information table, to acquire a vector extraction module configured to extract a character vector sequence, a position vector sequence and a type vector sequence, a semantic extraction module configured to extract a semantic representation vector sequence, to splice the semantic representation vector of the question text character in the semantic representation vector sequence and the semantic representation vector of the attribute name, and to predict an attribute name segment and an attribute value segment in the question text; and
acquiring (S402) training data, wherein, the training data comprises: at least one attribute name in the information table, a sample question text, and a sample attribute name segment and a sample attribute value segment corresponding to the sample question text; and
training (S403) the question answering model by taking the sample question text and the at least one attribute name as inputs of the question answering model and the sample attribute name segment and the sample attribute value segment as outputs of the question answering model.

8. The method of claim 7, wherein, training (S403) the question answering model by taking the sample question text and the at least one attribute name as the inputs of the question answering model and the attribute name segment and the attribute value segment as the outputs of the question answering model, comprises:
acquiring a predicted attribute name segment and a predicted attribute value segment output by the question answering model by inputting the sample question text and the at least one attribute name into the question answering model;
constructing a loss function based on the predicted attribute name segment, the predicted attribute value segment, the sample attribute name segment, and the sample attribute value segment; and
implementing training by performing a coefficient adjustment on the question answering model based on a value of the loss function.

9. The method of claim 7, wherein, the question answering model further comprises: a semantic matching module, configured to determine a semantic matching degree by performing semantic matching on the semantic representation vector of the question text character and the semantic representation vector of the attribute name in the semantic representation vector sequence;
wherein, training (S403) the question answering model by taking the sample question text and the at least one attribute name as inputs of the question answering model and the sample attribute name segment and the sample attribute value segment as outputs of the question answering model, comprises:
acquiring a predicted attribute name segment and a predicted attribute value segment output by the question answering model by inputting the sample question text and the at least one attribute name into the question answering model;
constructing a first loss function based on the predicted attribute name segment, the predicted attribute value segment, the sample attribute name segment, and the sample attribute value segment;
constructing a second loss function based on a predicted matching degree output by the semantic matching module and a preset matching degree threshold;
constructing a total loss function based on the first loss function and the second loss function; and
implementing training by performing a coefficient adjustment on the question answering model based on the value of the total loss function.

10. An apparatus (600) for question answering based on a table, comprising:
a first determining module (610), configured to determine a question text to be processed and an information table for question answering, wherein, the information table comprises: at least one attribute name;
a second determining module (620), configured to determine a character vector sequence, a position vector sequence and a type vector sequence based on the question text and the at least one attribute name;
a third determining module (630), configured to determine an attribute name segment and an attribute value segment in the question text based on the character vector sequence, the position vector sequence and the type vector sequence; and
a fourth determining module (640), configured to determine an answer corresponding to the question text based on the attribute name segment, the attribute value segment and the information table.

11. An apparatus (700) for training a question answering model, comprising:
a constructing module (710), configured to construct an initial question answering model, wherein, the question answering model is configured to perform a vector extraction on a question text and an attribute name in an information table, to acquire an vector extraction module configured to extract a character vector sequence, a position vector sequence and a type vector sequence, a semantic extraction module configured to extract a semantic representation vector sequence, to splice the semantic representation vector of the question text character in the semantic representation vector sequence and the semantic representation vector of the attribute name, and to predict an attribute name segment and an attribute value segment in the question text;
an acquiring module (720), configured to acquire training data, wherein, the training data comprises: at least one attribute name in the information table, a sample question text, and a sample attribute name segment and a sample attribute value segment corresponding to the sample question text; and
a training module (730), configured to train the question answering model by taking the sample question text and the at least one attribute name as inputs of the question answering model and the sample attribute name segment and the sample attribute value segment as outputs of the question answering model.

12. An electronic device, comprising:
at least one processor; and
a memory communicatively connected to the at least one processor; wherein,
the memory is stored with instructions executable by the at least one processor, and when the instructions are performed by the at least one processor, the at least one processor is caused to perform the method of any of claims 1 to 6 or the method of any of claims 7 to 9.

13. A non-transitory computer readable storage medium stored with computer instructions, wherein, the computer instructions are configured to cause a computer to perform the method of any of claims 1 to 6 or the method of any of claims 7 to 9.

14. A computer program product comprising a computer program, wherein when the computer program is executed by a processor, the method of any of claims 1 to 6 or the method of any of claims 7 to 9 are implemented.
